(19) **Europäisches Patentamt**
**European Patent Office**
**Office européen des brevets**

(11) **EP 2 816 301 A1**

(12) **EUROPEAN PATENT APPLICATION**

(43) Date of publication:
**24.12.2014 Bulletin 2014/52**

(51) Int Cl.:
**F25B 49/02** *(2006.01)*  **G05B 15/02** *(2006.01)*
**G06Q 50/06** *(2012.01)*

(21) Application number: **13172404.9**

(22) Date of filing: **18.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Danfoss A/S**
**6430 Nordborg (DK)**

(72) Inventors:
• **Funder-Kristensen, Torben**
**6400 Soenderborg (DK)**
• **Green, Torben**
**6200 Aabenraa (DK)**
• **Slot, Allan**
**6400 Soenderborg (DK)**

(54) **A method for controlling an integrated cooling and heating facility**

(57) The invention describes energy cost saving potentials in a food retail system in context with a smart grid system utilising thermal storage and heat recovery technology. The invention is based on case examples and theoretical studies to describe the technology advantages. To obtain the cost optimisation in complex refrigeration systems, a method for minimisation of cost is described.

**EP 2 816 301 A1**

**Description**

FIELD OF THE INVENTION

The present invention relates to a method for controlling an integrated cooling and heating facility. More particularly, the present invention provides a method which allows the integrated cooling and heating facility to be controlled in an energy optimizing manner, seen from a total perspective, i.e. not merely from the perspective of the isolated integrated cooling and heating facility.

BACKGROUND OF THE INVENTION

Based on the obvious society challenges symptomized by climate change, fossil fuel scarcity and rising peak demand resulting in black-outs of energy supply, the global society needs to minimize the emission of $CO_2$, secure energy supplies by introducing more renewable energy resources and at the same time minimize investments in the electricity grid. To do that, new smarter methods of managing energy and reducing energy consumption are necessary. The electricity grid is challenged by the rising amount of renewable energy sources as wind and solar power which impacts the balancing of the grid (voltage, frequency). Actual price of electricity has become very volatile and even temporarily negative prices are observed. Systems acting in the smart grid are called Demand-Response (DR) enabled and have the ability to respond to demands posed by smart grid responsible parties like electricity utilities or aggregators.

Cooling, such as refrigeration, consumes a high amount of energy and has a high potential for thermal storage due to free available compressor capacity. Cooling such as refrigeration represents the largest energy consumption in e.g. a food retail store. Dependent on climate conditions, up to 50% of energy consumption is used for cooling and freezing of perishable food stuff. Consequently, the efficiency of refrigeration systems has been increased throughout the years. There is a potential for being an important stakeholder in the smart grid comprising one or more energy suppliers and one or more energy consumers. Until recently focus has been on the non-refrigeration parts of the food retail stores e.g. light, rail heating and HVAC. As the refrigeration system is the most energy consuming and at the same time also the most critical process in the food retail sector, refrigeration calls for innovation to contribute to the extent its potential deserves.

Besides energy efficiency food security and safety are basic strong values that have fuelled the historical developments of refrigeration. Consequently, technologies have developed during the last century to satisfy these needs and today advanced systems for optimization of the food retail business are available. There are different specific technology areas for optimization of which the most important is energy optimization, detection and diagnosis of failures in a cooling facility and finally selection of new environmentally benign refrigerants. Majority of efforts have been towards internal system optimization and only modest focus has been towards the external opportunities supported by the new energy paradigms that are rapidly developing.

Refrigeration systems are normally outlined with a capacity to serve the worst conditions for the cooling needs, i.e., hot and humid summer conditions. It means that refrigeration plants are operating below capacity even during the major part of the hottest day and night and during the most of the year. Cooling, such as refrigeration, has a high potential for utilising thermal storage due to the temporarily unused compressor capacity. Thus there is a potential for being an important stakeholder in the smart grid comprising one or more energy suppliers and one or more energy consumers.

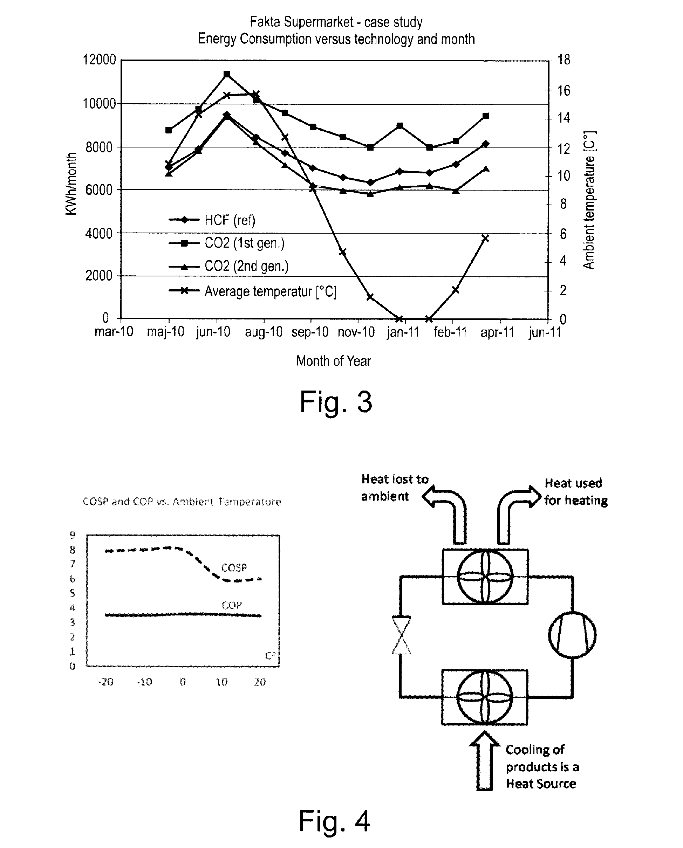

New opportunities have been identified with the reintroduction of $CO_2$ as refrigerant. Fig. 3 shows a comparison in compressor energy usage for similar stores using different refrigerants (R404A versus $CO_2$). The latest generation of $CO_2$ systems shows very good performance compared to R404A and furthermore the $CO_2$ systems have the advantage of being suitable for providing high temperature heating. The opportunity to run systems in combined cooling and heating mode will open up further opportunities to add value to smart energy systems

DESCRIPTION OF THE INVENTION

It is an object of embodiments of the invention to provide a method for controlling an integrated cooling and heating facility which allows the costs of operating the integrated cooling and heating facility to be minimised, seen from a total perspective.

The invention provides a method for controlling an integrated cooling and heating facility comprising a vapour compression system with two or more heat exchangers, each arranged for providing cooling or heating, the vapour compression system being connected to an electrical grid being external to the vapour compression system, the method comprising the steps of:

- providing a cost function for operating the integrated cooling and heating facility, said cost function establishing monetary energy costs of operating the vapour compression system,

- said monetary energy costs including monetary expenses for electrical energy received from the external electrical grid and consumed by the vapour compression system, and

- said monetary energy costs including monetary expenses for thermal energy consumed at a location of the integrated cooling and heating facility and/or monetary revenue for thermal energy produced by the vapour compression system, and

- operating the vapour compression system in such a manner that the monetary energy costs established by the cost function are minimised.

In the present context the term 'integrated cooling and heating facility' should be interpreted to mean a facility which is capable of providing cooling as well as heating. The integrated cooling and heating facility comprises a vapour compression system. In the present context the term 'vapour compression system' should be interpreted to mean any system in which a flow of fluid medium, such as refrigerant, circulates and is alternatingly compressed and expanded, thereby providing heating and refrigeration of specific volumes. Thus, the vapour compression system will typically comprise a compressor, e.g. in the form of a compressor rack, a heat rejecting heat exchanger, e.g. in the form of a condenser or a gas cooler, an expansion device and a heat consuming heat exchanger, e.g. in the form of an evaporator, arranged in a refrigerant path. Thus, refrigerant flowing in the refrigerant path is alternatingly compressed by the compressor and expanded by the expansion device, and heat is rejected at the heat rejecting heat exchanger, and heat is consumed at the evaporator. Accordingly, the vapour compression system is capable of providing heating at the heat rejecting heat exchanger, and of providing cooling at the evaporator.

Thus, the integrated cooling and heating facility may, e.g., be a cooling system, such as a refrigeration system or an air condition system, in which heat rejected from a heat rejecting heat exchanger, such as a condenser or a gas cooler, is reclaimed partly or totally. The reclaimed thermal energy, in the form of the reclaimed heat, may be used for heating rooms or water at or near the integrated cooling and heating facility, and/or it may be supplied to an external thermal grid for heating rooms or water remote from the integrated cooling and heating facility.

As an alternative, the integrated cooling and heating facility may, e.g., be a heat pump, in which thermal energy in the form of cooling being provided at a heat consuming heat exchanger, such as an evaporator, is reclaimed. The reclaimed thermal energy may, in this case, be used for lowering the temperature inside rooms or smaller closed volumes, e.g., in the form of refrigerating facilities, or even for lowering the temperature of specific elements, e.g., eutectic plates or phase change materials, at or near the integrated cooling and heating facility, and/or it may be supplied to an external thermal grid for cooling rooms or water remote from the integrated cooling and heating facility.

The vapour compression system is connected to an electrical grid being external to the vapour compression system. Thus, the vapour compression system receives electrical energy from the external electrical grid, the received electrical energy being used for operating the vapour compression system, in particular for operating the compressor. In return the owner of the integrated cooling and heating facility pays the electricity supplier for the consumed energy. The owner of the system will have an interest in optimising the energy consumption based on time dependent electricity prices or for offering capacity reserves either in the form of using temporarily higher or lower energy amounts.

The electricity supplier may have an interest in avoiding fluctuation or ripples in the electrical grid, and in maintaining a smooth energy production. In order to obtain this, the electricity supplier may request consumers of electrical energy, such as the integrated cooling and heating facility, to adjust their energy consumption if the total energy consumption of all energy consumers connected to the grid does not match an expected total energy consumption at the time.

According to the method of the invention, a cost function for operating the integrated cooling and heating facility is initially provided. The cost function establishes monetary energy costs of operating the vapour compression system. The monetary energy costs include monetary expenses for electrical energy received from the external electrical grid and consumed by the vapour compression system. Thus, the cost function takes into account the payment to the electricity supplier for the consumed electrical energy, as described above.

The monetary energy costs further include monetary expenses for thermal energy consumed at a location of the integrated cooling and heating facility and/or monetary revenue for thermal energy produced by the vapour compression system. Thus, the cost function takes into account the costs for operating the integrated cooling and heating facility, where operating the integrated cooling and heating facility is for heating or cooling parts of the integrated cooling and heating facility and/or is for heating or cooling the building, where the integrated cooling and heating facility is positioned, and which require such heating or cooling. This may, e.g. include costs involved with receiving thermal energy from an external thermal grid, such as a district heating grid or a district cooling grid. Alternatively or additionally, it may include costs for fossil fuels used for operating a local heating system, such as an oil-burner or gas-burner in a central heating system.

In the case that, for instance, reclaimed heat from a refrigeration system is used for providing central heating in the building where the integrated cooling and heating facility is positioned, the need for thermal energy being supplied from external sources is reduced, and thereby the costs involved with obtaining thermal energy from external sources can also be reduced.

Alternatively or additionally, the monetary costs may include revenues obtained for supplying excess thermal energy to an external thermal grid. This will be described in further detail below.

Thus, it may sometimes be feasible to consume more electrical energy if the resulting reduction in costs for external thermal energy exceeds the increase in costs for consumed electrical energy, and/or if the extra revenue obtained exceeds the increase in costs.

Thus, the cost function reflects the combined costs involved with operating the integrated cooling and heating facility, from a complete perspective, in the sense that the costs are not regarded in an isolated manner, but rather the entire facility is regarded as a whole. Thus, an increase in costs involved with operating one part of the integrated cooling and heating facility may be accepted, if it results in a decrease in costs involved with operating another part of the integrated cooling and heating facility and/or an increase in revenue, which at least compensates the increase in costs.

Finally, the vapour compression system is operated in such a manner that the monetary energy costs established by the cost function are minimised. This is an advantage, because the vapour compression system is thereby operated in such a manner that the total costs involved with operating the integrated cooling and heating facility are minimised, as described above.

Heating systems have mainly two purposes; to make hot water for sanitary purpose as cleaning or to produce space heat for comfort. While heat recovery from refrigeration systems is seen in several new installations, the majority of heating systems are still decoupled from the refrigeration system. With the reintroduction of $CO_2$ as refrigerant, the advantages of utilizing the refrigeration system for heating purposes have increased significantly. $CO_2$ shows very good properties for heating water at high temperatures due to $CO_2$'s high energy capacity at high temperatures. After leaving the hot water heat exchanger, the $CO_2$ discharge is finally cooled by low temperature return water from the heating system.

The total energy efficiency including usable cooling energy (Qcool) and usable heating energy ($Q_{Heat}$) of, e.g., a supermarket store (COSP) becomes very high as much of the energy now is used. The combined Coefficient of System Performance (COSP) values of up to 6 have been reported from a case study where cooling only provides numbers below 4. Wcompr is the energy used by the compressor

$$COSP = \frac{Q_{Cool} + \sum Q_{Heat}}{W_{Compr}}$$

A simple outline of the energy waste or the choice of heat recovery is shown in Fig. 4. Facilities with online COP and COSP measurements have clearly shown the potential of introducing heat recovery, see Fig. 4. However, still approximately 70% of the energy in prior art systems is released to the ambient and further potential exist, if more systems are integrated.

The monetary energy costs may further include monetary revenue for demand response services supplied by the vapour compression system to the external electrical grid. In the present context the term 'demand response services' should be interpreted to mean services provided by the integrated cooling and heating facility to the external electrical grid, where the integrated cooling and heating facility responds to demands from the external electrical grid to increase or decrease its energy consumption, in order to allow the external electrical grid to avoid fluctuations or ripples in the grid, and to maintain a smooth energy production. Such services may be rewarded by the owner of the external electrical grid, e.g. in the form of a reduction of the rates for the energy consumed by the integrated cooling and heating facility, and/or in the form of a revenue from the owner of the external electrical grid to the owner of the integrated cooling and heating facility.

The vapour compression system may further be connected to a thermal grid being external to the vapour compression system, and the monetary energy costs may include monetary revenue for thermal energy supplied by the vapour compression system to the external thermal grid. According to this embodiment, apart from being connected to an external electrical grid, the vapour compression system is also connected to an external thermal grid, e.g. in the form of a district heating grid or a district cooling grid. Thus, the vapour compression system may receive thermal energy from the external thermal grid, and/or it may supply thermal energy to the external thermal grid. Accordingly, the thermal energy being reclaimed as described above may either be utilized locally, or it may be supplied to the external thermal grid. When the vapour compression system supplies thermal energy to the external thermal grid, a revenue is obtained from the owner of the external thermal grid for the supplied thermal energy. This revenue is taken into account when the total costs involved with operating the integrated cooling and heating facility are established.

The step of establishing monetary energy costs may comprise establishing revenue for thermal energy supplied by the vapour compression system to the external thermal grid as a function of time. In some cases, the rate paid by the owner of the external thermal grid for the thermal energy supplied by the vapour compression system may vary as a function of time, e.g. due to ordinary market mechanisms regulating energy rates. Alternatively or additionally, the rate may vary according to the time of day, e.g. being high during the daytime and low during the night-time, and/or according to the time of year, e.g. being high during winter and low during summer, or vice versa, depending on whether the external thermal grid is a heating grid or a cooling grid. In this case it may be desirable to take the current rate into account when providing the cost function for operating the integrated cooling and heating facility. For instance, it may be desirable to produce more excess thermal energy and supply it to the thermal grid, when the rate of thermal energy is high, even if this increases the electrical energy consumption of the integrated cooling and heating facility. Similarly, it may be desirable to reduce the production of excess thermal energy, when the rate of thermal energy is low.

The external thermal grid may be or comprise a district cooling grid and/or a local cooling micro-grid for cooling facilities external to the vapour compression system. In this case the external thermal grid is a cooling grid, and the vapour compression system is capable of supplying thermal energy in the form of cooling provided by the evaporator to the external thermal grid. The cooling may, e.g., be in the form of air conditioning supplied to buildings.

In the present context the term 'district cooling grid' should be interpreted to mean a thermal grid which supplies thermal energy in the form of cooling to buildings and/or facilities within a larger area, such as a larger urban area, a country district and/or a region. A district cooling grid may typically be a grid which is operated with a commercial goal, i.e. the owner of the district cooling grid aims to earn money by supplying cooling to the buildings and/or facilities connected to the grid.

In the present context the term 'local cooling micro-grid' should be interpreted to mean a thermal grid which supplies thermal energy in the form of cooling to buildings and/or facilities within a smaller area, such as a shopping mall, a building block, a hotel, an apartment building, etc. A local cooling micro-grid may, e.g., be operated by the buildings and/or facilities connected to the cooling micro-grid, in which case the costs involved with operating the local cooling micro-grid may simply be shared among the buildings and/or facilities connected to the grid in accordance with the consumption of the individual buildings and/or facilities, but it may not be the intention that the local cooling micro-grid should produce a monetary surplus.

The local cooling micro-grid may, e.g., be connected to a district cooling grid.

Alternatively or additionally, the external thermal grid may be or comprise a district heating grid and/or a local heating micro-grid for heating facilities external to the vapour compression system. In this case the external thermal grid is a heating grid, and the vapour compression system is capable of supplying thermal energy in the form of heating provided by the heat rejecting heat exchanger to the external thermal grid. The heating may, e.g., be in the form of central heating supplied to buildings and/or heating of domestic water.

In the present context the term 'district heating grid' should be interpreted to mean a thermal grid which supplies heating to buildings and/or facilities within a larger area, and the term 'local heating micro-grid' should be interpreted to mean a thermal grid which supplies thermal energy in the form of heating to buildings and/or facilities within a smaller area, similar to what is described above. The remarks set forth above with reference to cooling grids are equally applicable here.

The external thermal grid may comprise a local thermal power generating facility. In the present context the term 'local thermal power generating facility' should be interpreted to mean a facility which is capable of supplying thermal energy to the integrated cooling and heating facility, and which is arranged at or near the integrated cooling and heating facility. The local thermal power generating facility may, e.g., be selected among the following facilities: Local solar thermal plants, local air-source thermal plants, or local geo-source plants.

According to this embodiment, at least part of the thermal energy required at the building where the integrated cooling and heating facility is positioned, is generated by the local thermal power generating facility. Accordingly, the production of the local thermal power generating facility may be adjusted in accordance with the thermal energy being available from the vapour compression system, if this turns out to be feasible. Furthermore, the operating costs of the local thermal power generating facility may be taken into account when the cost function for operating the integrated cooling and heating facility is provided.

The smart grid terminology is by definition associated with electricity consumption and production. However, considering the growing interconnectivity in the modern thermal energy systems, a similar demand response system can be applied for heating systems. Heating consumers may for some instances act as producers whether the heating consumers use a heat pump with excess capacity or the heating consumers use solar thermal panels or other heating sources. This provides an opportunity for exploiting free refrigeration capacity in commercial or industrial refrigeration, especially in cases where refrigeration demand is low and electricity price is low. The exact composition of smart thermal grid connectivity may depend on various factors to obtain the best cost performance and energy efficiency. Taking into account that the fraction of renewable electricity supply sources will increase, the TEWI (Total Equivalent Warming Impact) of the heat pump process will be potentially very low in certain periods. To make the combined refrigeration and heat pump work in practice, it would be necessary to add ambient heat sources as e.g. geothermal, ground or air connected to evaporators in parallel with the evaporators in the store. This has been done in rare cases, but has a high potential for further development.

The step of establishing monetary energy costs may comprise establishing expenses for electrical energy received by the vapour compression system from the external electrical grid as a function of time. In some cases, the rate charged by the supplier of the electricity for the electrical energy supplied to the vapour compression system may vary as a function of time, e.g. due to ordinary market mechanisms regulating energy rates. Alternatively or additionally, the rate may vary according to the time of day, e.g. being high during the daytime peak periods and low during the night-time, and/or according to the time of year, e.g. being high during winter and low during summer. In this case it may be desirable to take the current rate into account when providing the cost function for operating the integrated cooling and heating facility. For instance, it may be desirable to consume more electrical energy, and to either store some of the energy or produce thermal energy which is used locally or supplied to a thermal grid, when the rate of electrical energy is low. Similarly, it may be desirable to reduce the electrical energy consumption, e.g. by minimising the excess thermal energy produced, and/or by using previously stored energy, when the rate of electrical energy is high.

The step of establishing monetary energy costs may comprise taking ambient conditions into account. The ambient conditions may, e.g., include the time of year, weather forecasts, outdoor temperatures, precipitation, etc.

The method may further comprise the step of storing work made by a compressor of the vapour compression system in a thermal storage facility of the integrated cooling and heating facility, said thermal storage facility being capable of supplying work stored therein to the vapour compression system in order to reduce energy consumption of the vapour compression system at a time subsequent to the a time when the work is stored.

According to this embodiment, the electrical energy consumption of the vapour compression system, notably of a compressor of the vapour compression system, is increased at a time where this is feasible, e.g. due to the rate of electrical energy being low and/or in order to provide demand response services to the external electrical grid, where the external electrical grid requests that the integrated cooling and heating facility increases its energy consumption. This results in excess cooling or heating being produced by the vapour compression system, due to excess work being performed by the compressor. The excess work is then stored in the thermal storage facility, e.g. in the form of an ice storage or a heat reservoir. At a later point in time, e.g. when the rate of electrical energy has increased, and/or the external electrical grid requests that the integrated cooling and heating facility decreases its energy consumption, the work which was previously stored in the thermal storage facility is discharged from the thermal storage facility and supplied to the vapour compression system. Thereby the electrical energy consumption of the integrated cooling and heating facility can be reduced at this point in time.

Thus, according to the embodiment described above, it is possible to shift the energy consumption of the integrated cooling and heating facility in time, e.g. in order to minimise the costs for electrical energy supplied to the integrated cooling and heating facility and/or in order to provide demand response services to the external electrical grid.

Alternatively or additionally, the method may further comprise the step of shifting energy consumption of the vapour compression cycle in time by using a thermal storage facility of the integrated cooling and heating facility, said method comprising the steps of discharging said thermal storage facility in order to reduce the energy consumption from the external electrical grid of the vapour compression cycle, and charging said thermal storage facility in order to increase the energy consumption from the external electrical grid of the vapour compression cycle.

This embodiment is similar to the embodiment described above, in that the thermal storage facility is used for shifting electrical energy consumption. Thus, the electrical energy consumption may be increased at one point in time, and part of the energy may be used for charging the thermal storage facility. Subsequently, the thermal storage facility may be discharged, and thereby the electrical energy consumption at that point in time is reduced.

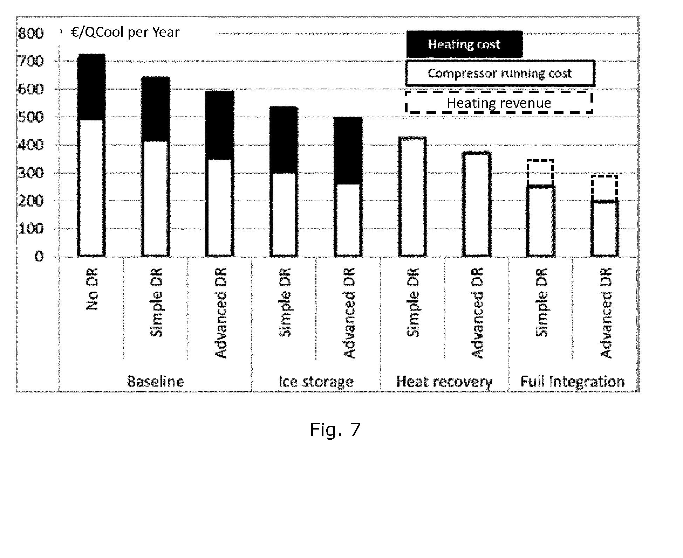

Thermal storage is an old concept which has been used for optimizing refrigeration or even making refrigeration possible at all. Thermal storage provides several opportunities for optimizing the refrigeration or cooling cycle in a time perspective and in the context of utilizing the refrigeration plant capacity for more than just refrigeration in the conventional sense. If electricity prices are very volatile, load shedding can be adjusted to optimize the energy cost, but refrigeration needs the thermal storage to perform load shedding. Some basic calculations seen in Table 1 (based on the case from Fig. 3) shows that the costs for electricity can be significantly reduced dependent on volatility of kWh price deviation and the load shed ability. Fig. 7 shows the potential for energy savings considering a store with different thermal storage capacities and different levels of Demand response capabilities for optimizing the energy costs. Electricity prices are assumed to be two levels (night/day) in the simple DR and full connected to the electricity spot market in the advanced DR. The important information is that thermal storage can be utilized using the mass of refrigerated goods or even adding a specific large thermal mass (e.g. ice bank). In the case of utilizing the food as thermal storage, it is necessary to pay attention to the food safety and quality issues which may arise when temperatures become fluctuating.

|  | no storage | 4 hour storage | 8 hour storage | 12 hour storage |  |
|---|---|---|---|---|---|
|  | 943 | 760 | 605 | 498 | DKK |
|  | storage | 828 | 1628 | 2375 | kWh |
|  | savings | 183 | 338 | 445 | DKK |
|  | savings | 19 | 36 | 47 | % |

Table 1

The thermal storage facility may be or comprise an ice storage connected to the vapour compression system. In this case, when the thermal storage is charged, ice is created in the ice storage, and when the thermal storage is discharged, the ice which was previously created in the ice storage is used for cooling purposes (either directly or to subcool the refrigerant before expansion), and thereby the cooling provided by the vapour compression system can be reduced, thereby reducing the electrical power consumption of the vapour compression system.

As an alternative, the thermal storage facility may be or comprises a heat reservoir connected to the vapour compression system. In this case, when the thermal storage is charged, a medium, such as water, at the heat reservoir is heated, thereby storing thermal energy in the heat reservoir. When the thermal storage is discharged, the heated medium is used for heating purposes, and thereby the energy necessary to provide the required heating, e.g. in the form of electrical energy consumed by the compressor or thermal energy in the form of central heating originating from a district or local heating system, is reduced.

The external electrical grid may comprise an external electrical power facility. In the present context the term 'external electrical power facility' should be interpreted to mean a power facility which supplies electrical energy within a larger area, such as a larger urban area, a country district and/or a region, via an electrical grid. An external electrical power facility may typically be a facility which is operated with a commercial goal, i.e. the owner of the electrical power facility aims to earn money by supplying electrical energy to the buildings and/or facilities connected to the electrical grid.

The external electrical power facility may be selected among the following facilities: Nuclear-powered power plant, natural gas-powered electrical power plant, coal-fuelled electrical power plant, oil-fuelled electrical power plant, external hydroelectric plants, external wind turbine plants, external biomass plants, or external fuel cells.

Alternatively or additionally, the external electrical grid may comprise a local electrical power generating facility. In the present context the term 'local electrical power generating facility' should be interpreted to mean a power facility which supplies electrical energy to buildings and/or facilities within a smaller area, such as a smaller urban area, a shopping mall, a building block, a hotel, an apartment building, within the building where the integrated cooling and heating facility is positioned, etc. The local electrical power generating facility may be selected among the following facilities: Local hydroelectric plants, local wind turbine plants, local biomass plants, local solar photovoltaic plants, or local fuel cells.

Thus, according to this embodiment, at least some of the electrical energy required in order to operate the integrated cooling and heating facility is generated locally by means of the local electrical power generating facility. In the case that the local power generation facility is a renewable power generating facility, such as a wind turbine plant or a solar photovoltaic plant, the costs involved in generating the electrical energy locally may be very low. In this case it may very well be advantageous to increase the electrical energy consumption, in particular if a revenue can be obtained by supplying thermal energy to an external thermal grid. This may also advantageously be taken into account when the cost function for operating the integrated cooling and heating facility is provided.

The step of establishing a cost function may comprise establishing a function of the form:

$$Cost = SUM\left(\frac{X}{COP} * Pe\right) + Y * Ph - SUM\left(X * \left(1 + \frac{1}{COP}\right) * Ph\right)$$

.

X is the cooling power multiplied with time, COP the coefficient of performance . Y is the heating energy acquired at the heating cost (Ph) The last section is the monetary income obtained by selling (internally or externally) the energy coming from the cooling process. In this formula it is shown as 100% utilisation but it could be less i.e. if the is partly heat is rejected to ambient)

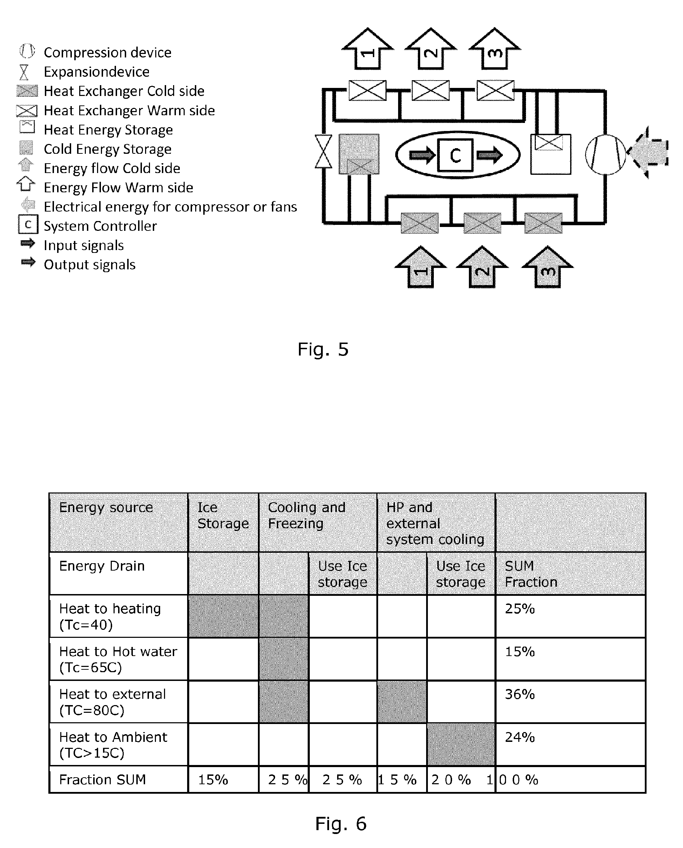

To describe the energy balance in the system a matrix of the cooling applications (energy source) and the heating drain sources is made, see Fig. 5. There are three energy sources (arrows 1, 2 and 3 pointing towards the integrated cooling and heating facility) and three heating drains (arrows 1, 2 and 3 pointing away from the integrated cooling and heating facility). Two thermal storage devices are provided, one for cold appliance (e.g. ice bank) and one for high temperature storage (e.g. hot water). In Fig.6 an example of the cost calculations for a system running in different modes during the year is shown. Combinations of specific energy sources and heating drains are selected. Each combination in the matrix is assigned a COP value based on best common practice together with a value of X and Y and a price for electricity (Pe) and heating. The assumption is that each of the matrix points will be run separately (but sum up to 100%).

For the sake of simplicity, four applications are selected. Each application can be assigned to more degrees of Demand-Response control. Either the lowest level which is no Demand-Response (only optimized thermostatic control), a limited Demand-Response program including simple tariff schemes or an advanced Demand-Response algorithm with predictive control based on weather forecast or very fast signal for load shedding. The results of the calculations are shown in Fig. 7.

1) Baseline application, i.e., only normal refrigeration system with heat release to the ambient. This system shows a clear improvement as Demand-Response systems are applied. Between 10% and 17% savings in cost can be obtained by adding Demand-Response to the systems.

2) Baseline application as in 1) plus ice bank which can cover 25% of system capacity. The ice bank thermal storage is a very effective component to use. It will allow for flexible use of the system as the load can be shed to higher degree. Ice bank can be used twofold - either for reducing the discharge pressure and thereby obtain higher process efficiency or for direct cooling with pumped $CO_2$. Demand-Response enabled controls may utilize the options for load shedding. Savings on the cooling process is significant, but total cost is still high due to the heating needs.

3) Baseline application as in 1) plus heat recovery for space heating and sanitary water (heat storage). Especially $CO_2$ has sufficiently high discharge temperatures to heat between 65°C to 95°C with acceptable efficiencies. Heat recovery is seen to be very effective in reducing total cost as it eliminates the conventional heating costs. The Demand-Response enabled controls may utilize the heat storage (hot water tank) to determine when to run in less efficient condition to save overall cost. The cooling process is less efficient than the conventional optimized process and much lower in efficiency than the ice bank system. However, this is due to increased condensing pressure for obtaining high water temperatures.

4) Baseline application as in 1) plus as in 2) plus as in 3) plus external heat drain (i.e. district heating). Dependent on food retail store size, there may be more high temperature discharge energy available after the basic sanitary water needs have been satisfied. In this case, it is assumed to be at the same amount as energy used for sanitary purposes. This will normally be the case, however, food retail stores with large bakery or slaughter departments may have a different ratio between sanitary water needs and high temperature discharge. Especially the opportunity of selling unlimited energy to a thermal drain (e.g. district heating) is a splendid Demand-Response feature. In the calculations, selling price of heat is assumed to be only 50% of the gas price. It is worth noting that the compressor running cost is higher than seen in Fig. 7 showing the compressor cost minus the revenue from selling energy to the thermal grid.

It has to be mentioned that Demand-Response also includes the possibility of including very short term response abilities, e.g., compressor cut-out within few seconds. Dependent on regions, this can be a very profitable capability to include. Normally, a once per year payment is submitted for having the capacity reserve available a limited amount of times per year. This extra Demand-Response benefit is not reflected in the calculations.

The following section describes an example of optimization of the cost of running the combined cooling and heating system, which includes the possibility of delivering heat to both a district heating system and to the local heat system, i.e. tap water and space heating, in the supermarket.

The object of optimization is to minimize the total cost of energy consumption for both the refrigeration system and the heating system. With heat reclaim the refrigeration system will be able to deliver heating by compromising the efficiency of the refrigeration process. The trade-off decision can be described by the following optimization formulation

$$\min_{COP, \dot{Q}_{heat}, \dot{Q}_{heatdist}, \dot{Q}_{cooldist}} J(t) = \alpha(t) \cdot \int_{\tau_0}^{\tau_1} \dot{W}_{El} \, d\tau + \beta(t) \cdot \int_{t_0}^{t_1} \dot{Q}_{heat} \, d\tau - \gamma(t) \cdot \int_{\tau_0}^{\tau_1} \dot{Q}_{heatdist} \, d\tau \qquad - \varepsilon(t)$$

$$\cdot \int_{\tau_0}^{\tau_1} \dot{Q}_{cooldist} \, d\tau$$

Subject to:
"System dynamics"

$$COP(t) \cdot \dot{W}_{El} \geq \dot{Q}_{ref}$$

$$\dot{Q}_{reject} \geq \dot{Q}_{heatmin}$$

The combined energy costs for refrigeration and heating is given by $J(t)$, where the first term is the cost contribution from the refrigeration plant. The refrigeration cost is given by multiplying the price on electrical energy, $\alpha(t)$, with the integral of the electrical power, $\dot{W}_{El}$. The cost contribution for the secondary heat source, e.g. district heating or gas, is described by the second term of $J(t)$, where the time varying price of the secondary energy source, $\beta(t)$, is multiplied with the integral of the heating power, $\dot{Q}_{heat}$. The third term of $J(t)$ denotes the possible income from delivering heat energy to a district heating system. The time variant price of the compensation is denoted by $\gamma(t)$ and the delivered heat is denoted by $\dot{Q}_{heatdist}$. The fourth term describes the possible income from absorbing energy from a district cooling system. The time variant price of the compensation is denoted by $\varepsilon(t)$ and the absorbed energy is denoted by the integral of $\dot{Q}_{cooldist}$. The object of optimization is then to choose $COP$, $\dot{Q}_{heat}$, $\dot{Q}_{heatdist}$ and $\dot{Q}_{cooldist}$, such that $J(t)$, the combined energy cost, is minimized without violating any of the constraints. The optimization will of course have to take the dynamics of the system into account when designing a control strategy for realizing an optimization of $J(t)$. In addition, there will be a constraint on the delivery of refrigeration given by the second constraint. The combined required cooling energy is given the following equations:

$$\dot{Q}_{refload} = \dot{Q}_{ref} + \dot{Q}_{hp} + \dot{Q}_{cooldist} + \dot{Q}_{icestorage}$$

The heat transfer rate that is required for removing sufficient amount of energy from the stored goods in the various display cases is denoted by $\dot{Q}_{ref}$. The remaining terms denote energy contributions from different cooling applications that can be attached to the refrigeration system to ensure that delivery of heat can be fulfilled. The term $\dot{Q}_{hp}$ denotes the heat transfer rate to a heat pump evaporator and $\dot{Q}_{cooldist}$ is the heat transfer rate to a heat pump evaporator which is connected to a district cooling system. The last term $\dot{Q}_{icestorage}$ denotes the heat transfer rate to the evaporator in the ice storage tank which can be used to move the consumption of energy for the refrigeration plant in time and thereby be used as an assert in cost optimization scheme.

The constraint with respect to the heat transfer rate of the rejected heat, $\dot{Q}_{reject}$, has to be equal to or larger than some minimum requirement. The combined rejected heat transfer rate can be described by the following equation:

$$\dot{Q}_{reject} = \dot{Q}_{amb} + \dot{Q}_{hr} + \dot{Q}_{heatdist}$$

The heat transfer rate to the ambient is denoted by, $\dot{Q}_{amb}$, and the heat transfer rate to the heat reclaim system is denoted by, $\dot{Q}_{hr}$. The last term, $\dot{Q}_{cooldist}$, denotes the heat transfer rate to the district heating system. The minimum requirement for, $\dot{Q}_{reject}$, is given by the physically determined minimum, $\dot{Q}_{heatmin}$, which is dependent on the refrigeration load, $\dot{Q}_{refload}$, and the isentropic efficiency of the compressors in the system. The operational scenarios will determine which of the terms in the equation describing $\dot{Q}_{refload}$ will be non-zero, other than $\dot{Q}_{ref}$. The operational conditions can course $\dot{Q}_{reject} = \dot{Q}_{amb}$ or $\dot{Q}_{reject} = \dot{Q}_{hr} + \dot{Q}_{heatdist}$ or anything in between.

The optimization formulation described reduces considerably when seasonal and geographical assumptions are applied. In a winter operation mode, the natural load on the refrigeration system will be at a minimum and the heat produced will therefore also be at a minimum, thus delivering district heating becomes infeasible without absorbing energy from a heat pump evaporator, district cooling or ice storage. However, the need for district cooling will be at a minimum during winter and the price will therefore be too low.

Optimization strategy will be based on the ability to predict the cost function $J(t)$ over a reasonable period of time, e.g. 24 hours. The price on electrical energy for a given hour will typically be known 24 hours in advance; this is also assumed to be true for the other prices used in $J(t)$. Combining the price forecast with weather forecast will provide a basis for choosing operational scenario and thereafter minimizing the total energy cost. The minimization of $J(t)$ for a given operational scenario is achieved by choosing $COP$, $\dot{Q}_{heat}$, $\dot{Q}_{heatdist}$ and $\dot{Q}_{cooldist}$ without violating the constraints. The optimization should be repeated at each time step by using measurements to initiate the optimization. The solution will be updated at each time step and will therefore be able to account for changes in the weather, the operational scenario and/or the prices.

The invention further provides a controller for controlling an integrated cooling and heating facility, the controller being capable of controlling the integrated cooling and heating facility based on a method as described above.

Furthermore, the invention provides an integrated cooling and heating facility comprising at least one controller as described above, wherein the integrated cooling and heating facility is a refrigeration facility comprising a heat recovery system, and an integrated cooling and heating facility comprising at least one controller as described above, wherein the integrated cooling and heating facility is a heat pump comprising a cooling recovery system.

The present invention may be defined by means of the following clauses.

1. Method of controlling a cooling facility, the method comprising the steps of:

- establishing the cost for operating the cooling facility, the cost comprising establishment of a Demand-Response, the demand being a demand for heat generated by the cooling facility and to be transferred to a heat consuming entity, and the response being controlling the cooling facility depending on the demand and depending on costs for operating the cooling facility and for responding to the demand,
- the response comprising controlling one or more operating parameters of the cooling facility based on demand from one or more heat consuming entities of a smart grid which the cooling facility is connected to, and
- the demand comprising consume of heat of one or more of the following heat consuming entities being part of the smart grid which the cooling facility is connected to: a heat consuming entity within a building of the cooling facility, a heat consuming entity outside the building of the cooling facility, an intermediate heat consuming entity for draining heat from the cooling entity to a heat consuming entity, and
- where a supplemental energy consuming entity is capable of storing thermal energy within a thermal energy storing medium of the entity, the thermal energy stored in the medium being transferred to an entity of the cooling facility at a time of day later than a time of day, when the thermal energy is stored in the entity.

2. Method according to clause 1, where

- the cooling facility is a refrigeration system of a supermarket or a cold store, and where the heat consuming entity is commercial or industrial heating installations of the building of the cooling facility,
- the heat consuming entity heating an interior within the building and/or the heat consuming entity heating water consumed by persons and/or consumed by heating facilities within the building.

3. Method according to clause 1, where

- the cooling facility is a refrigeration system of a supermarket or a cold store, and where the heat consuming entity is a heat draining medium of the smart grid which the cooling facility is connected to,
- the heat draining medium of the smart grid draining heat generated by the cooling facility to commercial or industrial heating installations outside the building of the cooling facility.

4. Method according to any of the preceding clauses, where

- the cost of operating the cooling facility furthermore comprises establishment of the cost of electrical energy for operating the cooling facility, and where
- the method comprises comparing cost of electrical energy and possible income for transferring heat generated by the cooling facility to the one or more heat consuming entities, and

- operating the cooling facility so that a coefficient of performance (COP) is optimized based on the comparison between cost of electrical energy for operating the cooling facility and possible income of heat generated and transferred to the one or more heat consuming entities.

5. Method of controlling a cooling facility, the method comprising establishing the cost of operating the cooling facility, the cost being established based on the following equation:

where X is 'Time multiplied with cooling capacity', Pe is 'Price of electrical energy', Y is 'Amount of energy available from non-electrical energy' such as gas, and Ph is 'Price of non-electrical energy'.

6. A method according to clause 5, where

- cost includes different costs of consuming electrical energy and/or non-electrical energy and possibly also cost of transferring thermal energy, preferably heat, possibly cold, during a period of time, the different costs comprising at least one of the following different cost schemes: costs of the cooling facility consuming electrical energy during the period of time, costs of cooling facility consuming non-electrical energy during the period of time, costs of one or more heat consuming entities consuming heat during the period of time, costs of one or more cold consuming entities consuming heat during the period of time costs of transferring heat from the cooling facility to one or more heat consuming entities during the period of time, costs of transferring cold from the cooling facility to one or more cold consuming entities during the period of time.

7. Method according to clause 1, where the cooling facility comprises an ice bank, the ice bank being capable of storing thermal energy provided by the cooling facility, and the method furthermore comprising the step of freeing cooling capacity stored in the ice bank, when cooling capacity of the cooling facility is needed, and with the proviso that heat produced by the heat dissipating heat exchanger and to be consumed by any heat consuming entity of the smart grid, which the cooling facility is connected to, is not possible of being consumed by any heat consuming entity, when the cooling capacity of the cooling facility is needed.

8. Method according to clause 1, where the cooling facility comprises an ice bank, the ice bank being capable of storing thermal energy provided by the cooling facility, and the method furthermore comprising the step of freeing cooling capacity stored in the ice bank, when cooling capacity of the cooling facility is needed, and when heat produced by the heat dissipating heat exchanger and to be consumed by any heat consuming entity of the smart grid which the cooling facility is connected to cannot be sold at a price higher than a selected limit price, when the cooling capacity of the cooling facility is needed.

9. A controller for controlling a cooling facility, the controller being capable of controlling the cooling facility based on a method according to any of clauses 1-8.

10. A cooling facility, the cooling facility comprising at least one controller capable of controlling the cooling facility based on a method according to any of clauses 1-8.

**Claims**

1. A method for controlling an integrated cooling and heating facility comprising a vapour compression system with two or more heat exchangers, each arranged for providing cooling or heating, the vapour compression system being connected to an electrical grid being external to the vapour compression system, the method comprising the steps of:

- providing a cost function for operating the integrated cooling and heating facility, said cost function establishing monetary energy costs of operating the vapour compression system,

- said monetary energy costs including monetary expenses for electrical energy received from the external electrical grid and consumed by the vapour compression system, and
- said monetary energy costs including monetary expenses for thermal energy consumed at a location of the integrated cooling and heating facility and/or monetary revenue for thermal energy produced by the vapour compression system, and

- operating the vapour compression system in such a manner that the monetary energy costs established by the cost function are minimised.

2. A method according to claim 1, wherein the monetary energy costs further includes monetary revenue for demand response services supplied by the vapour compression system to the external electrical grid.

3. A method according to claim 1 or 2, wherein the vapour compression system is further connected to a thermal grid being external to the vapour compression system, and wherein the monetary energy costs includes monetary revenue for thermal energy supplied by the vapour compression system to the external thermal grid.

4. A method according to claim 3, wherein the step of establishing monetary energy costs comprises establishing revenue for thermal energy supplied by the vapour compression system to the external thermal grid as a function of time.

5. A method according to claim 3 or 4, wherein the external thermal grid is or comprises a district cooling grid and/or a local cooling micro-grid for cooling facilities external to the vapour compression system.

6. A method according to any of claims 3-5, wherein the external thermal grid is or comprises a district heating grid and/or a local heating micro-grid for heating facilities external to the vapour compression system.

7. A method according to any of claims 3-6, wherein the external thermal grid comprises a local thermal power generating facility.

8. A method according to any of the preceding claims, wherein the step of establishing monetary energy costs comprises establishing expenses for electrical energy received by the vapour compression system from the external electrical grid as a function of time.

9. A method according to any of the preceding claims, wherein the step of establishing monetary energy costs comprises taking ambient conditions into account.

10. A method according to any of the preceding claims, further comprising the step of storing work made by a compressor of the vapour compression system in a thermal storage facility of the integrated cooling and heating facility, said thermal storage facility being capable of supplying work stored therein to the vapour compression system in order to reduce energy consumption of the vapour compression system at a time subsequent to the a time when the work is stored.

11. A method according to any of the preceding claims, further comprising the step of shifting energy consumption of the vapour compression cycle in time by using a thermal storage facility of the integrated cooling and heating facility, said method comprising the steps of discharging said thermal storage facility in order to reduce the energy consumption from the external electrical grid of the vapour compression cycle, and charging said thermal storage facility in order to increase the energy consumption from the external electrical grid of the vapour compression cycle.

12. A method according to claim 10 or 11, wherein the thermal storage facility is or comprises an ice storage connected to the vapour compression system.

13. A method according to claim 10 or 11, wherein the thermal storage facility is or comprises a heat reservoir connected to the vapour compression system.

14. A method according to any of the preceding claims, wherein the external electrical grid comprises an external electrical power facility.

15. A method according to any of the preceding claims, wherein the external electrical grid comprises a local electrical power generating facility.

16. A method according to any of the preceding claims, wherein the step of establishing a cost function comprises establishing a function of the form:

$$Cost = SUM\left(\frac{X}{COP} * Pe\right) + Y * Ph - SUM\left(X * \left(1 + \frac{1}{COP}\right) * Ph\right)$$ .

17. A controller for controlling an integrated cooling and heating facility, the controller being capable of controlling the integrated cooling and heating facility based on a method according to any of the preceding claims.

18. An integrated cooling and heating facility comprising at least one controller according to claim 17, wherein the integrated cooling and heating facility is a refrigeration facility comprising a heat recovery system.

19. An integrated cooling and heating facility comprising at least one controller according to claim 17, wherein the integrated cooling and heating facility is a heat pump comprising a cooling recovery system.

The Smart Grid will...          ....resulting in

Smart Grid enabled
Refrigeration and Air
Conditioning
(Demand Response)

Improve
Energy
Efficiency

Enable
Variable
renewables

Reduce
Peak
demand

CO2 emission
reduction

Energy
Security

Minimised
grid
investment

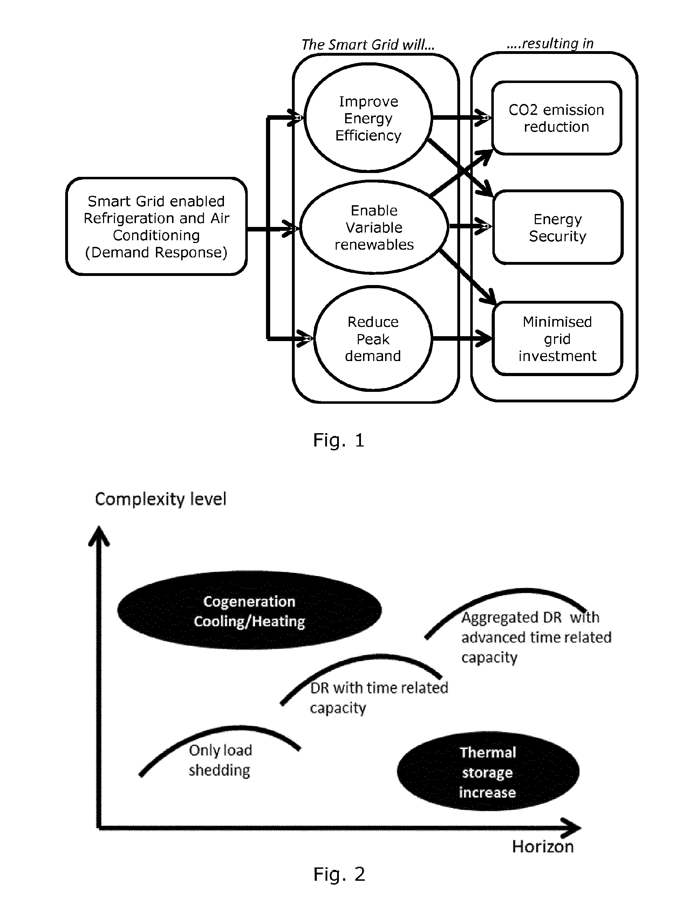

Fig. 1

Complexity level

Cogeneration
Cooling/Heating

Aggregated DR with
advanced time related
capacity

DR with time related
capacity

Only load
shedding

Thermal
storage
increase

Horizon

Fig. 2

Fakta Supermarket - case study
Energy Consumption versus technology and month

Fig. 3

COSP and COP vs. Ambient Temperature

Heat lost to ambient

Heat used for heating

Cooling of products is a Heat Source

Fig. 4

◐ Compression device
✗ Expansiondevice
▨ Heat Exchanger Cold side
▨ Heat Exchanger Warm side
▢ Heat Energy Storage
▨ Cold Energy Storage
⬆ Energy flow Cold side
⬆ Energy Flow Warm side
◀ Electrical energy for compressor or fans
[C] System Controller
➡ Input signals
➡ Output signals

Fig. 5

| Energy source | Ice Storage | Cooling and Freezing | | HP and external system cooling | | |
|---|---|---|---|---|---|---|
| Energy Drain | | | Use Ice storage | | Use Ice storage | SUM Fraction |
| Heat to heating (Tc=40) | | | | | | 25% |
| Heat to Hot water (Tc=65C) | | | | | | 15% |
| Heat to external (TC=80C) | | | | | | 36% |
| Heat to Ambient (TC>15C) | | | | | | 24% |
| Fraction SUM | 15% | 2 5 % | 2 5 % | 1 5 % | 2 0 % | 1 0 0 % |

Fig. 6

Fig. 7

Europäisches
Patentamt

European
Patent Office

Office européen
des brevets

**EUROPEAN SEARCH REPORT**

Application Number

EP 13 17 2404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/034718 A1 (DANFOSS AS [DK]; LARSEN LARS FINN SLOTH [DK]; THYBO CLAUS [DK]) 6 April 2006 (2006-04-06) | 1,8,9, 12-15, 17,18 | INV. F25B49/02 G05B15/02 G06Q50/06 |
| Y | * the whole document * | 2-7,10, 11 | |
| Y | EP 0 999 418 A2 (JOHNSON CONTROLS TECH CO [US]) 10 May 2000 (2000-05-10) * the whole document * | 2-7,10, 11 | |
| X | US 5 735 134 A (LIU SHENG [US] ET AL) 7 April 1998 (1998-04-07) * the whole document * | 1,9, 16-19 | |
| A | US 2012/123594 A1 (FINCH MICHAEL F [US] ET AL) 17 May 2012 (2012-05-17) * the whole document * | 1-19 | |

TECHNICAL FIELDS
SEARCHED      (IPC)

F25B
G05B
G06Q

The present search report has been drawn up for all claims

| Place of search | Date of completion of the search | Examiner |
|---|---|---|
| Munich | 27 November 2013 | Lucic, Anita |

EPO FORM 1503 03.82 (P04C01)

**ANNEX TO THE EUROPEAN SEARCH REPORT
ON EUROPEAN PATENT APPLICATION NO.**

EP 13 17 2404

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2013

| Patent document cited in search report | | Publication date | Patent family member(s) | | Publication date |
|---|---|---|---|---|---|
| WO 2006034718 | A1 | 06-04-2006 | AT | 453841 T | 15-01-2010 |
| | | | EP | 1802925 A1 | 04-07-2007 |
| | | | US | 2008000241 A1 | 03-01-2008 |
| | | | WO | 2006034718 A1 | 06-04-2006 |
| EP 0999418 | A2 | 10-05-2000 | CN | 1237725 A | 08-12-1999 |
| | | | EP | 0999418 A2 | 10-05-2000 |
| | | | JP | H11282503 A | 15-10-1999 |
| | | | SG | 85614 A1 | 15-01-2002 |
| | | | TW | 468025 B | 11-12-2001 |
| | | | US | 6185483 B1 | 06-02-2001 |
| US 5735134 | A | 07-04-1998 | JP | H1068554 A | 10-03-1998 |
| | | | US | 5735134 A | 07-04-1998 |
| US 2012123594 | A1 | 17-05-2012 | NONE | | |

EPO FORM P0459

For more details about this annex : see Official Journal of the European Patent Office, No. 12/82